(19) Europäisches Patentamt
European Patent Office
Office européen des brevets

(11) Veröffentlichungsnummer: **0 279 259**
**B1**

(12) # EUROPÄISCHE PATENTSCHRIFT

(45) Veröffentlichungstag der Patentschrift: **02.05.90**

(51) Int. Cl.⁴: **C07F 9/547**, A01N 57/16

(21) Anmeldenummer: **88101368.4**

(22) Anmeldetag: **01.02.88**

(54) **Thionophosphonsäureester.**

(30) Priorität: **14.02.87 DE 3704689**

(43) Veröffentlichungstag der Anmeldung: **24.08.88 Patentblatt 88/34**

(45) Bekanntmachung des Hinweises auf die Patenterteilung: **02.05.90 Patentblatt 90/18**

(84) Benannte Vertragsstaaten: **AT BE CH DE ES FR GB IT LI NL**

(56) Entgegenhaltungen:
**FR-A- 2 351 989**
**FR-A- 2 365 578**

(73) Patentinhaber: **BAYER AG, D-5090 Leverkusen 1 Bayerwerk(DE)**

(72) Erfinder: **Maurer, Fritz, Dr., Roeberstrasse 8, D-5600 Wuppertal 1(DE)**
Erfinder: **Sommer, Herbert, Dr., Platz 59, D-5630 Remscheid(DE)**
Erfinder: **Behrenz, Wolfgang, Dr., Untergruendemich 14, D-5063 Overath(DE)**
Erfinder: **Homeyer, Bernhard, Dr., Obere Strasse 28, D-5090 Leverkusen 3(DE)**
Erfinder: **Stendel, Wilhelm, Dr., In den Birken 55, D-5600 Wuppertal(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

## Beschreibung

Die Erfindung betrifft neue O-(6-Alkoxy-2-tert-butylpyrimidin-4-yl)-O-methyl-thionoethanphosphonsäure-diester, Verfahren und ein neues Zwischenprodukt zu ihrer Herstellung sowie ihre Verwendung als Schädlingsbekämpfungsmittel, vorzugsweise als Insektizide.

Es ist bereits bekannt, daß bestimmte O-(6-Alkoxy-2-alkyl-pyrimidin-4-yl)-O-alkyl-thionoalkanphosphonsäure-diester, wie z. B. O-(6-Ethoxy-2-iso-propyl-pyrimidin-4-yl)-O-methyl-thionoethanphosphonsäure-diester, O-(6-Methoxy-2-iso-propyl-pyrimidin-4-yl)-O-methyl-thionoethanphosphonsäure-diester, O-(6-Ethoxy-2-ethyl-pyrimidin-4-yl)-O-methyl-thionoethanphosphonsäure-diester und O-(6-Methoxy-2-iso-propyl-pyrimidin-4-yl)-O-methyl-thionomethanphosphonsäure-diester, zur Bekämpfung von Insekten geeignet sind (vgl. DE-OS 26 42 981). Die insektizide Wirkung dieser bekannten Verbindungen ist jedoch, insbesondere bei niedrigen Aufwandmengen bzw. Wirkstoffkonzentrationen und bezüglich der Wirkungsdauer, nicht immer zufriedenstellend.

Es wurden nun die neuen O-(6-Alkoxy-2-tert.-butyl-pyrimidin-4-yl)-O-methyl-thionoethanphosphonsäure-diester der allgemeinen Formel (I)

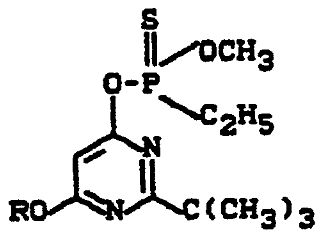

(I)

gefunden,
in welcher
R für Alkyl mit 1 bis 4 Kohlenstoffatomen oder für Cycloalkyl mit 3 oder 4 Kohlenstoffatomen steht.

Weiter wurde gefunden, daß man die neuen O-(6-Alkoxy-2-tert.-butyl-pyrimidin-4-yl)-O-methyl-thionoethanphosphonsäure-diester der Formel (I) erhält, wenn man

(a) 6-Alkoxy-2-tert.-butyl-4-hydroxy-pyrimidine der allgemeinen Formel (II)

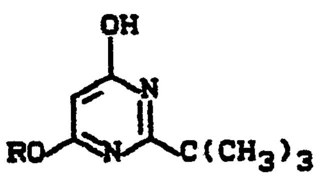

(II)

in welcher
R die oben angegebene Bedeutung hat,
mit Thionoethanphosphonsäure-chlorid-methylester der Formel (III)

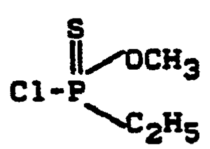

(III)

gegebenenfalls in Gegenwart eines Säureakzeptors und gegebenenfalls in Gegenwart eines Verdünnungsmittels umsetzt, oder

(b) O-(6-Hydroxy-2-tert.-butyl-pyrimidin-4-yl)-O-methyl-thionoethanphosphonsäure-diester der Formel (IV)

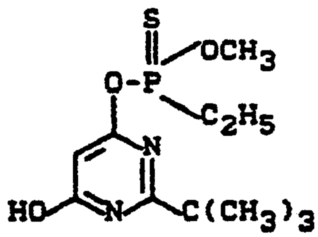

(IV)

mit Alkylierungsmitteln der allgemeinen Formel (V)
R-X(V)
in welcher
R die oben angegebene Bedeutung hat und
X für eine nucleofuge Abgangsgruppe steht,
gegebenenfalls in Gegenwart eines Säureakzeptors und gegebenenfalls in Gegenwart eines Verdünnungsmittels umsetzt.

Schließlich wurde gefunden, daß sich die neuen O-(6-Alkoxy-2-tert.-butyl-pyrimidin-4-yl)-O-methyl-thionoethanphosphonsäure-diester der Formel (I) durch sehr starke arthropodizide, insbesondere insektizide Wirksamkeit auszeichnen.

Die neuen Verbindungen der Formel (I) zeigen insbesondere eine überragende, lang anhaltende Wirkung gegen Dipteren, wie z.B. Musca domestica, auf basischen Unterlagen, wie z.B. auch auf gekalkten Wänden, sowie auf Holz bzw. Sperrholz. Auch gegen Bodeninsekten (also Insekten, die im oder am Boden oder in Bodennähe vorkommen), wie z. B. Phorbia-antiqua-Maden und Diabroticabalteata-Larven, zeigen die erfindungsgemäßen Wirkstoffe herausragende Wirkung.

Überraschenderweise zeigen die erfindungsgemäßen O-(6-Alkoxy-2-tert.-butyl-pyrmiidin-4-yl)-O-methyl-thionoethanphosphonsäure-diester der Formel (I) erheblich stärkere und/oder länger andauernde insektizide Wirkung als die oben erwähnten O-(6-Alkoxy-2-alkyl-pyrimidin-4-yl)-O-alkyl-thionoalkanphosphonsäure-diester. Die erfindungsgemäßen Stoffe stellen somit eine wertvolle Bereicherung der Technik dar.

In den allgemeinen Formeln (I), (II) und (V) stehen Alkyl und Cycloalkyl für Methyl, Ethyl, n-Propyl, n-Butyl, Isopropyl, Isobutyl, sec.-Butyl, tert.-Butyl, Cyclopropyl oder Cyclobutyl, vorzugsweise für Methyl, Ethyl, n-Propyl, Isopropyl oder Cyclopropyl, insbesondere für Methyl oder Ethyl.

Die Erfindung betrifft also vorzugsweise Verbindungen der Formel (I), in welcher R für Methyl, Ethyl, n-Propyl, Isopropyl oder Cyclopropyl steht, insbesondere Verbindungen der Formel (I) in welcher R für Methyl oder Ethyl steht.

Als besonders wichtige Verbindungen der Formel (I) seien genannt:
O-(6-Methoxy-2-tert.-butyl-pyrimidin-4-yl)-O-methylthionoethanphosphonsäure-diester und O-(6-Ethoxy-2-tert.-butyl-pyrimidin-4-yl)-O-methyl-thionoethanphosphonsäure-diester.

Verwendet man bei der Verfahrensvariante (a) beispielsweise 6-Methoxy-2-tert.-butyl-4-hydroxy-pyrimidin und Thionoethanphosphonsäure-chlorid-methylester als Ausgangsstoffe, so kann der Reaktionsablauf durch das folgende Formelschema wiedergegeben werden:

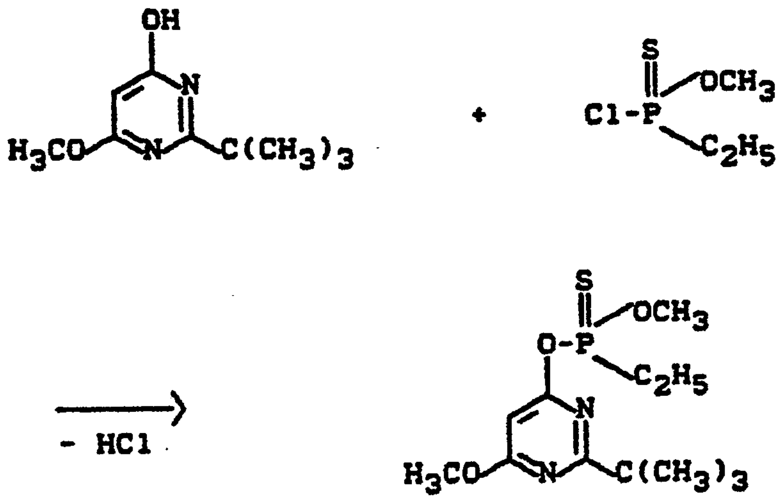

Verwendet man bei der Verfahrensvariante (b) beispielsweise O-(6-Hydroxy-2-tert.-butyl-pyrimidin-4-yl)-O-methyl-thionoethanphosphonsäure-diester und Ethylbromid als Ausgangsstoffe, so kann der Reaktionsablauf durch das folgende Formelschema wiedergegeben werden:

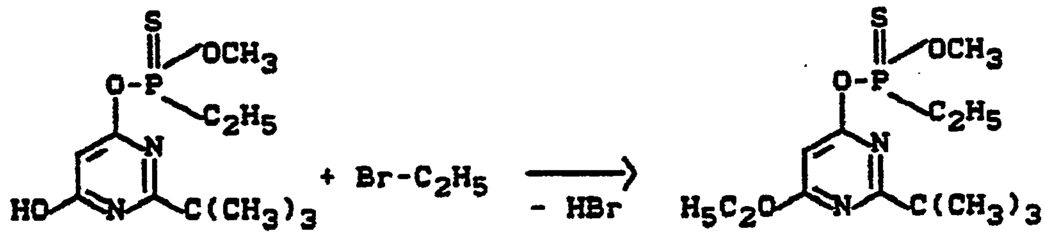


Die bei der Verfahrensvariante (a) als Ausgangsstoffe zu verwendenden 6-Alkoxy-2-tert.-butyl-4-hydroxy-pyrimidine sind durch die Formel (II) allgemein definiert. Bevorzugt werden Ausgangsstoffe der Formel (II), in welcher R für Methyl, Ethyl, n-Propyl, Isopropyl oder Cyclopropyl steht.
Insbesondere bevorzugt werden Ausgangsstoffe der Formel (II), in welcher R für Methyl oder Ethyl steht. Als Beispiele seien 6-Methoxy-2-tert.-butyl-4-hydroxypyrimidin und 6-Ethoxy-2-tert.-butyl-4-hydroxy-pyrimidin genannt.

Die 6-Alkoxy-2-tert.-butyl-4-hydroxy-pyrimidine der Formel (II) sind bekannt (vgl. DE-OS 26 42 981).

Man erhält die Verbindungen der Formel (II) in besonders vorteilhafter Weise, wenn man Pivalamidin oder ein Säure addukt hiervon, wie z. B. Pivalamidin-Hydrochlorid, mit einem Malonsäuredialkylester, wie z. B. Malonsäure-diethylester, in Gegenwart einer starken Base, wie z. B. Natrium-methylat, und in Gegenwart eines Verdünnungsmittels, wie z. B. Methanol, bei Temperaturen zwischen 10 °C und 80 °C umsetzt, nach mehrstündigem Rühren einengt, den Rückstand in Wasser aufnimmt, mit Salzsäure einen pH-Wert zwischen 7 und 10 einstellt und dann gleichzeitig ein Alkylierungsmittel, wie z. B. Dimethylsulfat oder Diethylsulfat, und Natronlauge so eindosiert, daß der pH-Wert im oben angegebenen Rahmen gehalten wird. Das nach Ende der Umsetzung und gegebenenfalls nach Kühlen mit Eis kristallin angefallene Produkt der Formel (II) wird durch Absaugen isoliert.

Der bei der Verfahrensvariante (a) weiter als Ausgangsstoff zu verwendende Thionomethanphosphonsäure-chloridmethylester der Formel (III) ist bereits bekannt (vgl. DE-AS 10 78 124, GB-PS 1 450 284 und DE-OS 29 20 172).

Der bei der Verfahrensvariante (b) als Ausgangsstoff zu verwendende O-(6-Hydroxy-2-tert.-butylpyrimidin-4-yl)-O-methyl-thionoethanphosphonsäure-diester der Formel (IV) ist noch nicht aus der Literatur bekannt und Teil der vorliegenden Erfindung.

Man erhält den neuen O-(6-Hydroxy-2-tert.-butyl-pyrimidin-4-yl)-O-methyl-thionoethanphosphonsäure-diester der Formel (IV), wenn man 4,6-Dihydroxy-2-tert.-butyl-pyrimidin der Formel (VI)

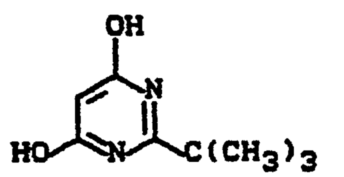

(VI)

mit Thionoethanphosphonsäure-chlorid-methylester der Formel (III)

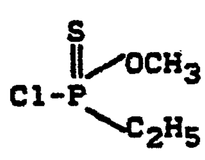

(III)

in Gegenwart eines Säurebindemittels, wie z. B. Kaliumcarbonat oder Triethylamin, und in Gegenwart eines Verdünnungsmittels, wie z. B. Acetonitril oder Methylenchlorid, bei Temperaturen zwischen -20 °C und +80 °C, vorzugsweise zwischen 0 °C und 50 °C, umsetzt. Zur Aufarbeitung wird - gegebenenfalls nach Einengen - mit Wasser und einem mit Wasser praktisch nicht mischbaren organischen Lösungsmittel, wie z. B. Toluol oder Methylenchlorid geschüttelt, die organische Phase abgetrennt und unter vermindertem Druck eingedampft, wobei das Produkt der Formel (IV) als Rückstand verbleibt.

Der Ausgangsstoff der Formel (VI) ist bereits bekannt (vgl. J. Heterocycl. Chem. 13 (1976), 1141 - 1144); ebenso der Ausgangsstoff der Formel (III) - siehe oben.

Die bei der Verfahrensvariante (b) weiter als Ausgangsstoffe zu verwendenden Alkylierungsmittel sind durch die Formel (V) allgemein definiert.

Bevorzugt werden Ausgangsstoffe der Formel (V), in welcher R für Methyl, Ethyl, n-Propyl, Isoproppyl oder Cyclopropyl steht und die nukleofuge Abgangsgruppe X für Halogen, insbesondere für Chlor, Brom oder Iod steht. Insbesondere bevorzugt werden Ausgangsstoffe der Formel (V), in welcher R für Methyl oder Ethyl steht und X für Chlor, Brom oder Iod steht.

Als Beispiele seien Methyl-chlorid, -bromid und -iodid sowie Dimethylsulfat, Ethyl-chlorid, -bromid und -iodid sowie Diethylsulfat, ferner Isopropylbromid und Cyclopropylchlorid genannt.

Die Alkylierungsmittel der Formel (V) sind bekannte Synthesechemikalien.

Die erfindungsgemäßen Verfahrensvarianten (a) und (b) zur Herstellung der neuen Verbindungen der Formel (I) werden vorzugsweise unter Verwendung von Verdünnungsmitteln und Säureakzeptoren durchgeführt.

Als Verdünnungsmittel kommen dabei praktisch alle inerten organischen Lösungsmittel in Frage. Hierzu gehören vorzugsweise aliphatische und aromatische, gegebenenfalls halogenierte Kohlenwasserstoffe wie Pentan, Hexan, Heptan, Cyclohexan, Petrolether, Benzin, Ligroin, Benzol, Toluol, Xylol, Methylenchlorid, Ethylenchlorid, Chloroform, Tetrachlorkohlenstoff, Chlorbenzol und o-Dichlorbenzol, Ether wie Diethyl- und Dibutylether, Glykoldimethylether und Diglykoldimethylether, Tetrahydrofuran und Dioxan, Ketone wie Aceton, Methyl-ethyl-, Methyl-isopropyl- und Methyl-isobutyl-keton, Ester wie Essigsäuremethylester und-ethylester, Nitrile wie z. B. Acetonitril und Propionitril, Amide wie z.B. Dimethyl- wie z. B. Dimethylformamid, Dimethylacetamid und N-Methyl-pyrrolidon sowie Dimethylsulfoxid, Tetramethylensulfon und Hexamethylphosphorsäuretriamid.

Als Säureakzeptoren können bei den erfindungsgemäßen Verfahrensvarianten (a) und (b) alle üblicherweise für derartige Umsetzungen verwendbaren Säurebindemittel eingesetzt werden. Vorzugsweise in Frage kommen Alkalimetallhydroxide wie z. B. Natrium- und Kaliumhydroxid, Erdalkalihydroxide wie z. B. Calciumhydroxid, Alkalicarbonate und -alkoholate wie Natrium- und Kaliumcarbonat, Natrium- und Kalium-tert.-butylat, ferner aliphatische, aromatische oder heterocyclische Amine, beispielsweise Triethylamin, Trimethylamin, Dimethylanilin, Dimethylbenzylamin, Pyridin, 1,5-Diazabicyclo-[4,3,0]-non-5-en (DBN), 1,8-Diazobicyclo-[5,4,0]-undec-7-en (DBU) und 1,4-Diazabicyclo-[2,2,2]-octan (DABCO).

Die Reaktionstemperaturen können bei den erfindungsgemäßen Verfahrensvarianten (a) und (b) in einem größeren Bereich variiert werden. Im allgemeinen arbeitet man bei Temperaturen zwischen 0 °C und 100 °C, vorzugsweise bei Temperaturen zwischen 10 °C und 80 °C.

Die erfindungsgemäßen Verfahrensvarianten (a) und (b) werden im allgemeinen unter Normaldruck durchgeführt. Es ist jedoch auch möglich, unter erhöhtem oder vermindertem Druck zu arbeiten.

Zur Durchführung der erfindungsgemäßen Verfahrensvariante (a) setzt man die Ausgangsstoffe der Formeln (II) und (III) im allgemeinen in angenähert äquimolaren Mengen ein. Ein Überschuß der einen oder anderen Komponente bis etwa 10 % ist jedoch problemlos möglich.

Die Reaktionskomponenten werden im allgemeinen in einem der oben angegebenen Lösungsmittel zusammengegeben und und mehrere Stunden gerührt, wobei die Temperatur im oben angegebenen Rahmen gehalten wird.

Zur der nach üblichen Methoden erfolgenden Aufarbeitung wird eingeengt, der Rückstand in einem mit Wasser praktisch nicht mischbaren Lösungsmittel, wie z. B. Toluol, aufgenommen, mit Wasser gewaschen und mit einem üblichen Trockenmittel, wie z. B. Natriumsulfat, getrocknet. Nach Filtration wird vom Filtrat das Lösungsmittel im Wasserstrahlvakuum abdestilliert.

Die neuen Verbindungen fallen in Form von Ölen an, die sich zum Teil nicht unzersetzt destillieren lassen, jedoch durch sogenanntes "Andestillieren", d. h. durch längeres Erhitzen unter vermindertem Druck auf mäßig erhöhte Temperaturen von den letzten flüchtigen Anteilen befreit und auf diese Weise gereinigt werden. Zu ihrer Charakterisierung dient der Brechungsindex.

Zur Durchführung der erfindungsgemäßen Verfahrensvariante (b) setzt man auf 1 Mol der Verbindung der Formel (IV) im allgemeinen zwischen 1 und 3 Mol, vorzugsweise zwischen 1,1 und 1,5 Mol des Alkylierungsmittels der Formel (V) ein.

Die Reaktionskomponenten werden im allgemeinen in einem der oben angegbenen Lösungsmittel zusammengegeben und mehrere Stunden gerührt, wobei die Temperatur im oben angegebenen Bereich gehalten wird. Die Aufarbeitung kann wie oben für die Verfahrensvariante (a) angegeben erfolgen.

Die Wirkstoffe eignen sich zur Bekämpfung von Arthropoden, insbesondere von Insekten, die in der Landwirtschaft, in Forsten, im Vorrats- und Materialschutz sowie auf dem Hygienesektor vorkommen. Sie sind gegen normal sensible und resistente Arten sowie gegen alle oder einzelne Entwicklungsstadien wirksam. Zu den oben erwähnten Schädlingen gehören:

Aus der Ordnung der Isopoda z.B. Oniscus asellus, Armadillidium vulgare, Porcellio scaber.

Aus der Ordnung der Diplopoda z.B. Blaniulus guttulatus.

Aus der Ordnung der Chilopoda z.B. Geophilus carpophagus, Scutigera spec.

Aus der Ordnung der Symphyla z.B. Scutigerella immaculata.

Aus der Ordnung der Thysanura z.B. Lepisma saccharina.

Aus der Ordnung der Collembola z.B. Onychiurus armatus.

Aus der Ordnung der Orthoptera z.B. Blatta orientalis, Periplaneta americana, Leucophaea maderae, Blattella germanica, Acheta domesticus, Gryllotalpa spp., Locusta migratoria migratorioides, Melanoplus

differentialis, Schistocerca gregaria.
Aus der Ordnung der Dermaptera z.B. Forficula auricularia.
Aus der Ordnung der Isoptera z.B. Reticulitermes spp..
Aus der Ordnung der Anoplura z.B. Phylloxera vastatrix, Pemphigus spp., Pediculus humanus corporis, Haematopinus spp., Linognathus spp.
Aus der Ordnung der Mallophaga z.B. Trichodectes spp., Damalinea spp.
Aus der Ordnung der Thysanoptera z.B. Hercinothrips femoralis, Thrips tabaci.
Aus der Ordnung der Heteroptera z.B. Eurygaster spp., Dysdercus intermedius, Piesma quadrata, Cimex lectularius, Rhodnius prolixus, Triatoma spp.
Aus der Ordnung der Homoptera z.B. Aleurodes brassicae, Bemisia tabaci, Trialeurodes vaporariorum, Aphis gossypii, Brevicoryne brassicae, Cryptomyzus ribis, Aphis fabae, Doralis pomi, Eriosoma lanigerum, Hyalopterus arundinis, Macrosiphum avenae, Myzus spp., Phorodon humuli, Rhopalosiphum padi, Empoasca spp., Euscelis bilobatus, Nephotettix cincticeps, Lecanium corni, Saissetia oleae, Laodelphax striatellus, Nilaparvata lugens, Aonidiella aurantii, Aspidiotus hederae, Pseudococcus spp. Psylla spp.
Aus der Ordnung der Lepidoptera z.B. Pectinophora gossypiella, Bupalus piniarius, Cheimatobia brumata, Lithocolletis blancardella, Hyponomeuta padella, Plutella maculipennis, Malacosoma neustria, Euproctis chrysorrhoea, Lymantria spp. Bucculatrix thurberiella, Phyllocnistis citrella, Agrotis spp., Euxoa spp., Feltia spp., Earias insulana, Heliothis spp., Spodoptera exigua, Mamestra brassicae, Panolis flammea, Prodenia litura, Spodoptera spp., Trichoplusia ni, Carpocapsa pomonella, Pieris spp., Chilo spp., Pyrausta nubilalis, Ephestia kuehniella, Galleria mellonella, Tineola bisselliella, Tinea pellionella, Hofmannophila pseudospretella, Cacoecia podana, Capua reticulana, Choristoneura fumiferana, Clysia ambiguella, Homona magnanima, Tortrix viridana.
Aus der Ordnung der Coleoptera z.B. Anobium punctatum, Rhizopertha dominica, Acanthoscelides obtectus, Acanthoscelides obtectus, Hylotrupes bajulus, Agelastica alni, Leptinotarsa decemlineata, Phaedon cochleariae, Diabrotica spp., Psylliodes chrysocephala, Epilachna varive stis, Atomaria spp., Oryzaephilus surinamensis, Antho nomus spp., Sitophilus spp., Otiorrhynchus sulcatus, Cosmopolites sordidus, Ceuthorrhynchus assimilis, Hypera postica, Dermestes spp., Trogoderma spp., Anthrenus spp., Attagenus spp., Lyctus spp., Meligethes aeneus, Ptinus spp., Niptus hololeucus, Gibbium psylloides, Tribolium spp., Tenebrio molitor, Agriotes spp., Cono derus spp., Melolontha melolontha, Amphimallon solsti tialis, Costelytra zealandica.
Aus der Ordnung der Hymenoptera z.B. Diprion spp., Hoplocampa spp., Lasius spp., Monomorium pharaonis, Vespa spp.
Aus der Ordnung der Diptera z.B. Aedes spp., Anopheles spp., Ceulex spp., Drosophila melanogaster, Musca spp., Fannia spp., Calliphora erythrocephala, Lucilia spp., Chrysomyia spp., Cuterebra spp., Gastrophilus spp., Hyppobosca spp., Stomoxys spp., Oestrus spp., Hypoderma spp., Tabanus spp., Tannia spp., Bibio hortulanus, Oscinella frit, Phorbia spp., Pegomyia hyoscyami, Ceratitis capitata, Dacus oleae, Tipula paludosa.

Einige der erfindungsgemäßen Wirkstoffe zeigen auch akarizide Wirkung.

Die erfindungsgemäßen Wirkstoffe zeichenen sich durch eine hervorragende insektizide Wirksamkeit aus; insbesondere bei der Bekämpfung von resistenten Dipteren, wie z. B. Musca domestica. Ihre Wirkung hält auch auf basischen Unterlagen, wie z. B. auf gekalkten Wänden, sowie auf Holz bzw. Sperrholz, sehr lange an. Besonders bevorzugt für diese Anwendungen wird die Verbindung der Formel I, in welcher R für Methyl steht.

Die erfindungsgemäßen Wirkstoffe können wegen ihrer hohen Stabilität auch sehr gut zur Bekämpfung von Bodeninsekten, wie z. B. Phorbia-antiqua-Maden und Diabrotica-balteata-Larven, eingesetzt werden. Besonders bevorzugt für diese Anwendungen werden die Verbindungen der Formel I, in welcher R für Methyl oder Ethyl (insbesondere Ethyl) steht.

Ganz besonders bevorzugt werden die erfindungsgemäßen Verbindungen der Formel (I) - insbesondere O-(6-Methoxy-2-tert.-butyl-pyrimidin-4-yl)-O-methyl-thionoethanphosphonsäure-diester - im Haushalts- und Hygiene-Sektor bei der Bekämpfung der gegenüber vielen Insektiziden resistenten Dipteren, wie z. B. Musca domestica verwendet.

Die erfindungsgemäßen Wirkstoffe der Formel (I) eignen sich auch zur Bekämpfung von Arthropoden, insbesondere von Insekten, die bei der Haltung landwirtschaftlicher Nutztiere, wie z.B. Rinder, Schafe, Ziegen, Pferde, Schweine, Esel, Kamele, Büffel, Kaninchen, Hühner, Puten, Enten, Gänse, sonstiger Haustiere, wie z.B. Hunde, Katzen und Stubenvögel sowie sog. Versuchstiere, wie z.B. Hamster, Meerschweinchen, Ratten und Mäuse auftreten. Durch die Bekämpfung dieser Insekten sollen Belästigungen und Leistungsminderungen (bei Fleisch, Milch, Wolle, Häuten, Eiern usw.) vermieden werden, so daß durch den Einsatz der erfindungsgemäßen Wirkstoffe eine wirtschaftlichere und einfachere Tierhaltung möglich ist.

Die Anwendung der erfindungsgemäßen Wirkstoffe geschieht im Bereich der Tierhaltung in bekannter Weise durch die Ausbringung geeigneter Formulierungen, z.B. durch Sprühen, Stäuben, Einstreichen der Umgebung der Tiere (z.B. Stallungen) oder gegebenenfalls auch durch dermale Anwendung in Form beispielsweise des Tauchens oder Badens (Dippen), Sprühens (Spray), Aufgießens (Pour-on und Spoton), des Waschens, des Einpuderns sowie mit Hilfe von wirkstoffhaltigen Formkörpern, wie Halsbändern, Ohrmarken, Schwanzmarken, Gliedmaßenbändern, Halftern, Markierungsvorrichtungen usw..

Die Wirkstoffe können in Abhängigkeit von ihrer jeweiligen physikalischen und/oder chemischen Eigenschaften in übliche Formulierungen übergeführt werden, wie Lösungen, Emulsionen, Suspensionen, Pulver, Schäume, Pasten, Granulate, Aerosole, Wirkstoff-imprägnierte Natur- und synthetische Stoffe, Feinstverkapselungen in polymeren Stoffen und in Hüllmassen für Saatgut, ferner in Formulierungen mit Brennsätzen, wie Rüucherpatronen, -dosen, -spiralen u.ä., sowie ULV-Kalt- und Warmnebel-Formulierungen.

Diese Formulierungen werden in bekannter Weise hergestellt, z.B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, Alkohole, wie Butanol oder Glycol sowie deren Ether und Ester, Ketone, wie Aceton, Methylethylketon, Methylisobutylketon oder Cyclohexanon, stark polare Lösungsmittel, wie Dimethylformamid und Dimethylsulfoxid, sowie Wasser; mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgase, wie Halogenkohlenwasserstoffe sowie Butan, Propan, Stickstoff und Kohlendioxid; als feste Trägerstoffe kommen in Frage: z.B. natürliche Gesteinsmehlem wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate; als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel; als Emulgier und/oder schaumerzeugende Mittel kommen in Frage: z.B. nichtionogene und anionische Emulgatoren, wie Polyoxyethylen-Fettsäure-Ester, Polyoxyethylen-Fettalkohol-Ether, z.B. Alkylarylpolyglykol-Ether, Alkylsulfonate, Alkylsulfate, Arylsulfonate sowie Eiweißhydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat, sowie natürliche Phospholipide, wie Kephaline und Lecithine, und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farb stoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90 %.

Die Wirkstoffe können in ihren handelsüblichen Formulierungen sowie in den aus diesen Formulierungen bereiteten Anwendungsformen in Mischung mit anderen Wirkstoffen, wie Insektiziden, Lockstoffen, Sterilantien, Akariziden, Nematiziden, Fungiziden, wachstumsregulierenden Stoffen oder Herbiziden vorliegen. Zu den Insektiziden zählen beispielsweise Phosphorsäureester, Carbamate, Carbonsäureester, chlorierte Kohlenwasserstoffe, Phenylharnstoffe, durch Mikroorganismen hergestellte Stoffe u.a..

Die Wirkstoffe können ferner in ihren handelsüblichen Formulierungen sowie in den aus diesen Formulierungen bereiteten Anwendungsformen in Mischung mit Synergisten vorliegen. Synergisten sind Verbindungen, durch die die Wirkung der Wirkstoffe gesteigert wird, ohne daß der zugesetzte Synergist selbst aktiv wirksam sein muß.

Der Wirkstoffgehalt der aus den handelsüblichen Formulierungen bereiteten Anwendungsformen kann in weiten Bereichen variieren. Die Wirkstoffkonzentration der Anwendungsformen kann von 0,0000001 bis zu 95 Gew.-% Wirk stoff, vorzugsweise zwischen 0,0001 und 1 Gew.-% liegen.

Die Anwendung geschieht in einer den Anwendungsformen angepaßten üblichen Weise.

Bei der Anwendung gegen Hygiene- und Vorratsschädlinge zeichnen sich die Wirkstoffe durch eine hervorragende Residualwirkung auf Holz und Ton sowie durch eine gute Alkalistabilität auf gekälkten Unterlagen aus.

Herstellungsbeispiele

Beispiel 1

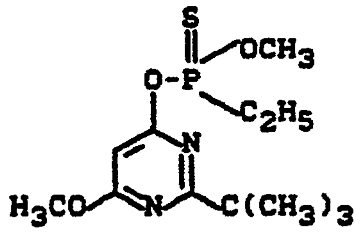

Verfahrensvariante (a)

16 g (0,096 Mol) Thionoethanphosphonsäurechlorid-methylester (95-%ig) werden bei 20 °C unter Rühren zu einer Mischung aus 17,9 g (0,098 Mol) 6-Methoxy-2-tert.-butyl-4-hydroxy-pyrimidin, 17,3 g (0,125 Mol) Kaliumcarbonat und 200 ml Acetonitril gegeben und die Mischung wird ca. 15 Stunden bei 20 °C gerührt. Nach Einengen wird der Rückstand in 100 ml Toluol aufgenommen, zweimal mit je 100 ml Wasser gewaschen, mit Natriumsulfat getrocknet und filtriert. Vom Filtrat wird das Lösungsmittel unter vermindertem Druck bei ca. 50 °C abdestilliert.

Man erhält 27,8 g (95 % der Theorie) O-(6-Methoxy-2-tert.-butyl-pyrimidin-4-yl)-O-methyl-thionoethanphosphonsäure-diester als öligen Rückstand vom Brechungsindex $n_D^{22}$ = 1,5114.

Verfahrensvariante (b)

8,5 g (0,06 Mol) Methyliodid werden bei 20 °C unter Rühren zu einer Mischung aus 14,5 g (0,05 Mol) O-(6-Hydroxy-2-tert.-butyl-pyrimidin-4-yl)-O-methyl-thionoethanphosphonsäure-diester, 9 g (0,65 Mol) Kaliumcarbonat und 80 ml Acetonitril gegeben. Das Reaktionsgemisch wird 2 Stunden bei 80 °C gerührt, unter vermindertem Druck (im Wasserstrahlvakuum) eingeengt und mit 150 ml Toluol versetzt. Man wäscht zweimal mit je 100 ml Wasser und trocknet über Natriumsulfat. Nach Filtration wird vom Filtrat das Lösungsmittel im Wasserstrahlvakuum abdestilliert und der Rückstand bei 50 °C andestilliert.

Man erhält so 13,7 g (90 % der Theorie) O-(6-Methoxy-2-tert.-butyl-pyrimidin-4-yl)-O-methyl-thionoethanphosphonsäure-diester als öligen Rückstand vom Brechungsindex $n_D^{22}$ = 1,5122.

Analog Beispiel 1 und entsprechend der allgemeinen Beschreibung der erfindungsgemäßen Herstellungsverfahren können die in der nachstehenden Tabelle aufgeführten Verbindungen der Formel (I) hergestellt werden.

**Tabelle: Weitere Beispiele für Verbindungen der Formel (I)**

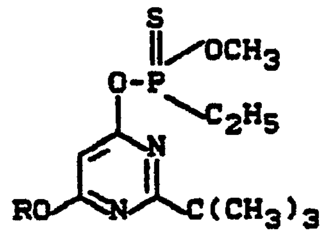

(I)

| Beispiel-Nr. | R | Brechungsindex |
|---|---|---|
| 2 | $C_2H_5$ | $n_D^{22}$ = 1,5096 |
| 3 | $CH_2CH_2CH_3$ | |
| 4 | $CH(CH_3)_2$ | |
| 5 | 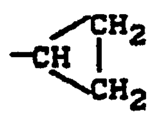 | |

Ausgangsstoffe der Formel (II)

Beispiel (II-1)

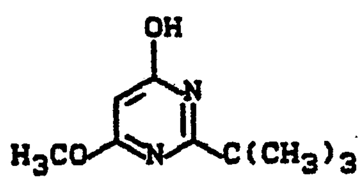

10,5 g einer 26-%igen Lösung von Pivalamidin-Hydrochlorid (0,02 Mol) in Methanol werden mit 10,8 g einer 30-%igen Lösung von Natriummethylat (0,06 Mol) in Methanol und mit 3,2 g (0,02 Mol) Malonsäurediethylester vermischt. Dieses Gemisch wird unter Rühren zwei Stunden auf 60 °C erhitzt, ca. 20 Stunden bei 20 °C gerührt und eingeengt. Der Rückstand wird in 10 ml Wasser aufgenommen, mit konzentrierter Salzsäure auf pH 8,2 gestellt und tropfenweise so mit 6,5 g (0,04 Mol) Dimethylsulfat und mit konzentrierter Natronlauge versetzt, daß der pH-Wert zwischen 8,0 und 8,5 bleibt. Das Reaktionsgemisch wird dann noch zwei Stunden bei 50 °C gerührt, wobei durch Zugabe von Natronlauge der pH-Wert im oben angegebenen Bereich gehalten wird. Nach Abkühlen auf 5 °C wird das kristallin angefallene Produkt durch Absaugen isoliert.

Man erhält 2,5 g (68 % der Theorie) 6-Methoxy-2-tert.-butyl-4-hydroxy-pyrimidin vom Schmelzpunkt 175 °C.

Analog erhält man:

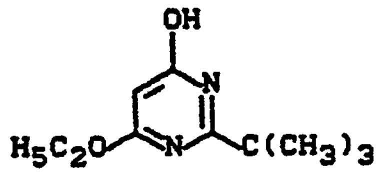

Ausgangsstoff der Formel (IV)

Beispiel (IV-1)

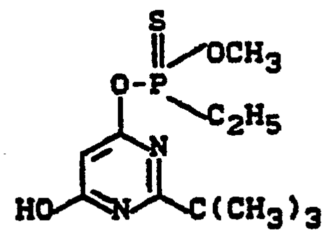

Ein Gemisch aus 24,2 g (0,144 Mol) 4,6-Dihydroxy-2-tert.-butyl-pyrimidin, 15,2 g (0,15 Mol) Triethylamin und 120 ml Methylenchlorid wird 30 Minuten bei 20 °C gerührt, dann auf 5 °C abgekühlt und tropfenweise mit 19 g (0,12 Mol) Thionoethanphosphonsäure-chlorid-methylester versetzt. Das Reaktionsgemisch wird 20 Stunden bei 20 °C gerührt, zweimal mit je 50 ml Wasser gewaschen und im Wasserstrahlvakuum eingedampft.

Man erhält so 33,5 g (96 % der Theorie) O-(6-Hydroxy-2-tert.-butyl-pyrimidin-4-yl)-O-methyl-thionoethanphosphonsäure-diester als kirstallinen Rückstand vom Schmelzpunkt 119 °C.

Verwendungsbeispiele

In einigen der nachfolgenden Verwendungsbeispielen wurden die nachstehend angegebenen Verbindungen als Vergleichsverbindungen eingesetzt:

(A)
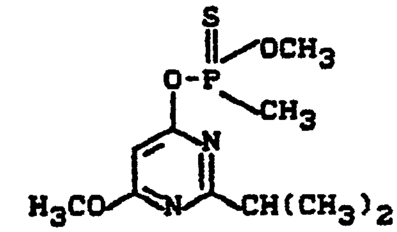
(DE-OS 26 42 981, Bsp. 4)

(B)
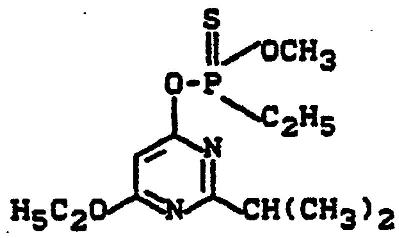
(DE-OS 26 42 981, Bsp. 10)

(C)
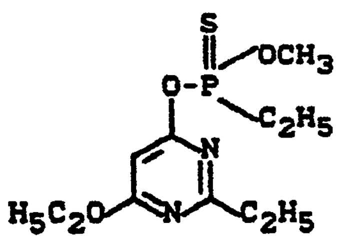
(DE-OS 26 42 981, Bsp. 13)

(D)
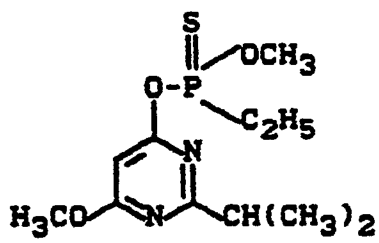
(DE-OS 26 42 981, Bsp. 12)

Beispiel A

$LT_{100}$-Test für Dipteren

Testtiere: Musca domestica (resistent)
Zahl der Testtiere: 25
Lösungsmittel: Aceton

2 Gewichtsteile Wirkstoff werden in 1000 Volumenteilen Lösungsmittel aufgenommen. Die so erhaltene Lösung wird mit weiterem Lösungsmittel auf die gewünschten geringeren Konzentrationen verdünnt.

2,5 ml Wirkstofflösung werden in eine Petrischale pipettiert. Auf dem Boden der Petrischale befindet sich ein Filterpapier mit einem Durchmesser von etwa 9,5 cm. Die Petrischale bleibt so lange offen stehen, bis das Lösungsmittel vollständig verdunstet ist. Je nach Konzentration der Wirkstofflösung ist die Menge Wirkstoff pro $m^2$ Filterpapier verschieden hoch. Anschließend gibt man die angegebene Anzahl der Testtiere in die Petrischale und bedeckt sie mit einem Glasdeckel.

Der Zustand der Testtiere wird laufend kontrolliert. Es wird diejenige Zeit ermittelt, welche für einen 100 %igen knock down-Effekt ($LT_{100}$) notwendig ist.

Bei diesem Test zeigte bei einer beispielhaften Wirkstoffkonzentration von 0,002 % die gemäß Herstellungsbeispiel (1) erhaltene Verbindung nach 170 Minuten eine 100 %ige Wirkung, während die Vergleichsverbindungen (B), (C) und (D) nach 360 Minuten nur eine 70-, 60- bzw. 20 %ige Wirkung zeigten.

Beispiel B

Residual-Test

Testtiere: Musca domestica (resistent)
Zahl der Testtiere: 25
Netzpulver-Grundsubstanz bestehend aus:
3 % diisobutylnaphthalin-1-sulfonsaures Natrium
6 % Sulfitablauge, teilweise kondensiert mit Anilin
40 % hochdisperse Kieselsäure, CaO-haltig
51 % Kolloid-Kaolin

Zur Herstellung einer zweckmäßigen Wirkstoffzubereitung vermischt man innig 1 Gewichtsteil Wirkstoff mit 9 Gewichtsteilen Netzpulver-Grundsubstanz. Das so erhaltene Spritzpulver wird in 90 Teilen Wasser suspendiert.

Die Wirkstoffsuspension wird in einer Aufwandmenge von z.B. 1 g Wirkstoff pro $m^3$ auf Unterlagen aus verschiedenen Materialien aufgespritzt.

Die Spritzbeläge werden in bestimmten Zeitabständen auf ihre biologische Wirkung geprüft.

Zu diesem Zweck bringt man die angegebene Anzahl der Testtiere auf die behandelten Unterlagen. Über die Testtiere wird ein flacher Zylinder gestülpt, der an seinem oberen Ende mit einem Drahtgitter verschlossen ist, um die Tiere am Entweichen zu hindern. Innerhalb von 8 Stun den Verweilzeit der Tiere auf der Unterlage wird die Abtötung der Versuchstiere in % bestimmt. Dabei bedeutet 100 %, daß alle Testtiere abgetötet wurden; 0 % bedeutet, daß keine Testtiere abgetötet wurden.

Bei diesem Test zeigte bei einer beispielhaften Aufwandmenge von 1 g/$m^2$ die gemäß Herstellungsbeispiel (1) erhaltene Verbindung auf den Testunterlagen (Ton, mit Calciumhydroxid gekalkter Ton, Sperrholz) noch nach 20 Wochen 100-%ige Wirkung, während die Vergleichsverbindung (A) auf den oben angegebenen Testunterlagen selbst bei der doppelten Aufwandmenge nach 20 Wochen keine nachweisbare Wirkung mehr zeigt.

Beispiel C

Grenzkonzentrations-Test / Bodeninsekten

Testinsekt: Phorbio antiqua-Maden (im Boden)
Lösungsmittel: 3 Gewichtsteile Aceton
Emulgator: 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Die Wirkstoffzubereitung wird innig mit dem Boden vermischt. Dabei spielt die Konzentration des Wirkstoffes in der Zubereitung praktisch keine Rolle, entscheidend ist allein die Wirkstoffgewichtsmenge pro Volumeneinheit Boden, welche in ppm (= mg/l) angegeben wird. Man füllt den Boden in Töpfe und läßt diese bei Raumtemperatur stehen.

Nach 24 Stunden werden die Testtiere in den behandelten Boden gegeben und nach weiteren 2 bis 7 Tagen wird der Wirkungsgrad des Wirkstoffs durch Auszählen der toten und lebenden Testinsekten in % bestimmt. Der Wirkungsgrad ist 100 %, wenn alle Testinsekten abgetötet worden sind, er ist 0 %, wenn noch genau so viele Testinsekten leben wie bei der unbehandelten Kontrolle.

Bei diesem Test zeigten bei einer beispielhaften Wirkstoffkonzentration von 20 ppm die gemäß den Herstellungsbeispielen (1) und (2) erhaltenen Verbindungen 100-%ige Wirkung, während die Vergleichsverbindung (A) bei dieser Konzentration keine nachweisbare Wirkung zeigte. Außerdem zeigten bei einer Wirkstoffkonzentration von 0,6 ppm die gemäß den Herstellungsbeispielen (1) und (2) erhaltenen Verbindungen ebenfalls 100-%ige Wirkung, während die Vergleichsverbindung (D) eine 50-%ige Wirkung und die Vergleichsverbindung (C) keine nachweisbare Wirkung zeigten.

Beispiel D

Grenzkonzentrations-Test / Bodeninsekten

Testinsekt: Diabrotica balteata Larven (im Boden)
Lösungsmittel: 3 Gewichtsteile Aceton
Emulgator: 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das

Konzentrat mit Wasser auf die gewünschte Konzentration.

Die Wirkstoffzubereitung wird innig mit dem Boden vermischt. Dabei spielt die Konzentration des Wirkstoffes in der Zubereitung praktisch keine Rolle, entscheidend ist allein die Wirkstoffgewichtsmenge pro Volumeneinheit Boden, welche in ppm (= mg/l) angegeben wird. Man füllt den Boden in Töpfe und läßt diese bei Raumtemperatur stehen.

Nach 24 Stunden werden die Testtiere in den behandelten Boden gegeben und nach weiteren 2 bis 7 Tagen wird der Wirkungsgrad des Wirkstoffs durch Auszählen der toten und lebenden Testinsekten in % bestimmt. Der Wirkungsgrad ist 100 %, wenn alle Testinsekten abgetötet worden sind, er ist 0 %, wenn noch genau so viele Testinsekten leben wie bei der unbehandelten Kontrolle.

Bei diesem Test zeigten bei einer beispielhaften Wirkstoffkonzentration von 20 ppm die gemäß den Herstellungsbeispielen (1) und (2) erhaltenen Verbindungen 100-%ige Wirkung, während die Vergleichsverbindung (A) bei dieser Konzentration keine nachweisbare Wirkung zeigte. Außerdem zeigten bei einer Wirkstoffkonzentration von 0,6 ppm die gemäß den Herstellungsbeispielen (1) und (2) erhaltenen Verbindungen ebenfalls 100-%ige Wirkung, während bei dieser Konzentration die Vergleichsverbindung (C) nur 20-%ige Wirkung und die Vergleichsverbindung (D) keine nachweisbare Wirkung zeigten.

Beispiel E

Test mit Lucilia cuprina resistent-Larven (Stamm Goondi windi, OP-resistent)

Emulgator:
35 Gewichtsteile Ethylenglykolmonomethylether
35 Gewichtsteile Nonylphenolpolyglykolether

Zur Herstellung einer zweckmäßigen Wirkstoffzubereitung vermischt man drei Gewichtsteile Wirkstoff mit sieben Gewichtsteilen des oben angegebenen Gemisches und verdünnt das so erhaltene Konzentrat mit Wasser auf die jeweils gewünschte Konzentration.

Etwa 20 Lucilia cuprina res.-Larven werden in ein Teströhrchen gebracht, welches ca. 1 $cm^3$ Pferdefleisch und 0,5 ml der Wirkstoffzubereitung enthält. Nach 24 Stunden wird der Abtötungsgrad bestimmt.

Bei diesem Test zeigten z.B. die Verbindungen der Herstellungsbeispiele 1 und 2 bei einer beispielhaften Konzentration von 300 ppm einen Abtötungsgrad von 100 %.

**Patentansprüche**

1. O-(6-Alkoxy-2-tert.-butyl-pyrimidin-4-yl)-O-methylthionoethanphosphonsäure-diester der allgemeinen Formel (I)

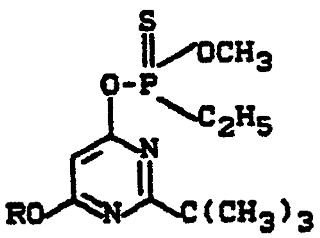

(I)

in welcher
R für Alkyl mit 1 bis 4 Kohlenstoffatomen oder für Cycloalkyl mit 3 oder 4 Kohlenstoffatomen steht.

2. Verbindungen gemäß Anspruch 1, wobei in Formel (I) R für Alkyl mit 1 bis 4 Kohlenstoffatomen steht.

3. Verbindung der Formel

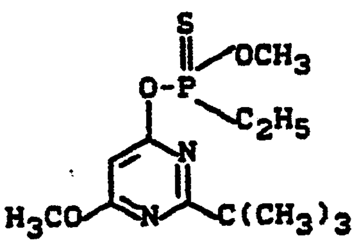

4. Verbindung der Formel

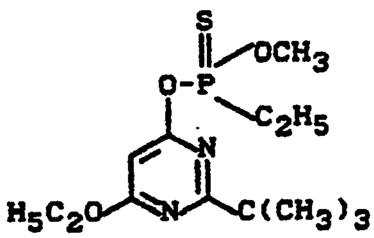

5. Verfahren zur Herstellung der O-(6-Alkoxy-2-tert.-butyl-pyrimidin-4-yl)-O-methyl-thionoethanphosphonsäure-diester der allgemeinen Formel (I)

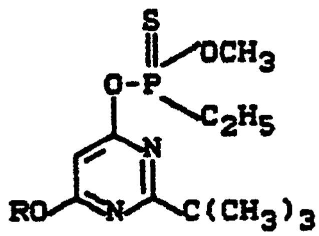

(I)

in welcher
R für Alkyl mit 1 bis 4 Kohlenstoffatomen oder für Cycloalkyl mit 3 oder 4 Kohlenstoffatomen steht, dadurch gekennzeichnet, daß man
(a) 6-Alkoxy-2-tert.-butyl-4-hydroxy-pyrimidine der allgemeinen Formel (II)

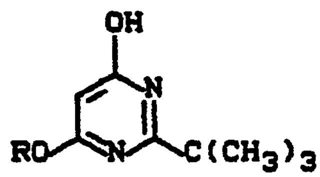

(II)

in welcher
R die oben angegebene Bedeutung hat,
mit Thionoethanphosphonsäure-chlorid-methylester der Formel (III)

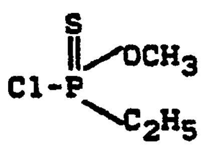

(III)

gegebenenfalls in Gegenwart eines Säureakzeptors und gegebenenfalls in Gegenwart eines Verdünnungsmittels umsetzt, oder
(b) O-(6-Hydroxy-2-tert.-butyl-pyrimidin-4-yl)-O-methyl-thionoethanphosphonsäure-diester der Formel (IV)

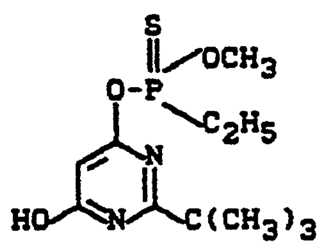

(IV)

mit Alkylierungsmitteln der allgemeinen Formel (V)
R-X (V)
in welcher

R die oben angegebene Bedeutung hat und
X für eine nucleofuge Abgangsgruppe steht,
gegebenenfalls in Gegenwart eines Säureakzeptors und gegebenenfalls in Gegenwart eines Verdünnungsmittels umsetzt.

6. Schädlingsbekämpfungsmittel, gekennzeichnet durch einen Gehalt an mindestens einer Verbindung gemäß den Ansprüchen 1 bis 4 bzw. der Formel (I) gemäß Anspruch 5.

7. Verwendung von Verbindungen gemäß den Ansprüchen 1 bis 4 bzw. der Formel (I) gemäß Anspruch 5 zur Bekämpfung von Schädlingen, insbesondere von Insekten.

8. Verfahren zur Bekämpfung von Schädlingen, dadurch gekennzeichnet, daß man Verbindungen gemäß den Ansprüchen 1 bis 4 bzw. der Formel (I) gemäß Anspruch 5 auf die Schädlinge, vorzugsweise Insekten oder ihren Lebensraum einwirken läßt.

9. Verfahren zur Herstellung von Schädlingsbekämpfungsmitteln, dadurch gekennzeichnet, daß man Verbindungen gemäß den Ansprüchen 1 bis 4 bzw. der Formel (I) gemäß Anspruch 5 mit Streckmitteln und/oder oberflächenaktiven Mitteln vermischt.

10. Verbindung der Formel

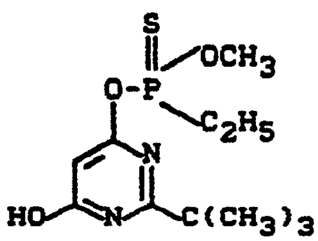

## Claims

1. O-(6-alkoxy-2-tert-butyl-pyrimidin-4-yl)-O-methyl-thionoethynephosphonic acid diesters of general formula (I)

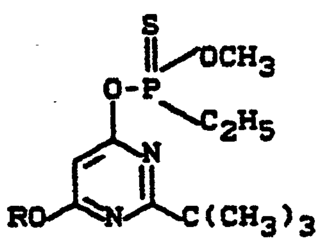

(I)

in which
R represents alkyl with 1 to 4 carbon atoms or cycloalkyl with 3 or 4 carbon atoms.

2. Compounds as claimed in claim 1, in which R represents alkyl with 1 to 4 carbon atoms in formula (I).

3. A compound of the formula

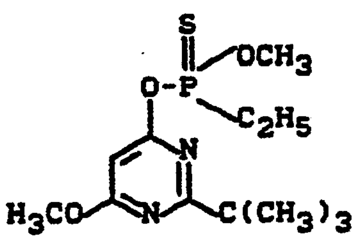

4. A compound of the formula

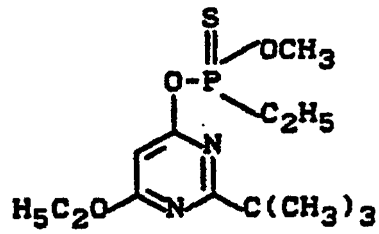

5. A process for the preparation of the O-(6-alkoxy-2-tert-butyl-pyrimidin-4-yl)-O-methyl-thionoethanephosphonic acid diester of general formula (I)

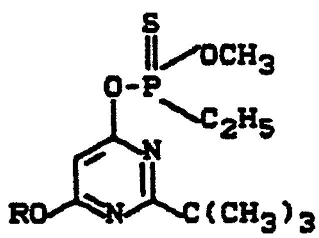

(I)

in which

R represents alkyl with 1 to 4 carbon atoms or cycloalkyl with 3 or 4 carbon atoms, which comprises reacting

(a) 6-alkoxy-2-tert-butyl-4-hydroxy-pyrimidine of general formula (II)

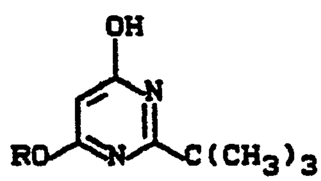

(II)

in which

R has the meaning given above, with thionoethanephosphonic acid chloride methyl ester of formula (III)

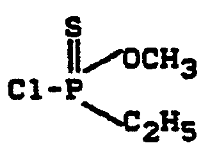

(III)

optionally in the presence of an acid acceptor and optionally in the presence of a diluent, or

(b) O-(6-hydroxy-2-tert-butyl-pyrimidin-4-yl)-O-methyl-thionoethanephosphonic acid diester of formula (IV)

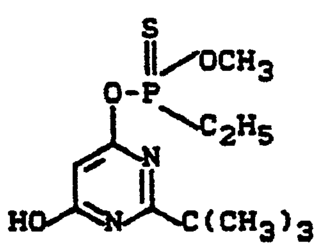

(IV)

is reacted with alkylating agents of general formula (V)

R–X (V)

in which R has the meanings give above and

X represents a nucleophilic leaving group, optionally in the presence of an acid acceptor and optionally in the presence of a diluent.

6. A pest control agent which comprises at least one compound as claimed in claims 1 to 4 or of the formula (I) as claimed in claim 5.

7. The use of compounds as claimed in claims 1 to 4 or of the formula (I) as claimed in claim 5 for the control of pests, in particular of insects.

8. A process for the control of pests, which comprises allowing compounds as claimed in claims 1 to 4 or of the formula (I) as claimed in claim 5 to act on the pests, especially insects, or their environment.

9. A process for the preparation of pest control agents, which comprises mixing compounds as claimed in claims 1 to 4 or of the formula (I) as claimed in claim 5 with extenders and/or suface-active agents.

10. The compound of the formula

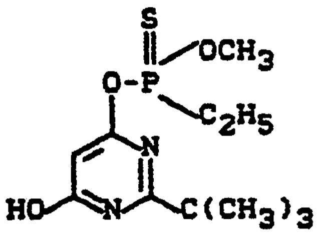

## Revendications

1. Diesters de 0-(6-alkoxy-2-tertio-butyl-pyrimidine-4-yle) et de O-méthyle d'acide thionoéthanephosphonique de formule générale (I)

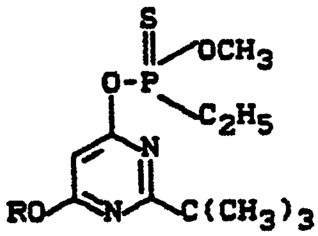

(I)

dans laquelle R est un groupe alkyle de 1 à 4 atomes de carbone ou un groupe cycloalkyle de 3 ou 4 atomes de carbone.

2. Composés suivant la revendication 1, dans lesquels R, dans la formule (I), est un groupe alkyle de 1 à 4 atomes de carbone.

3. Composé de formule

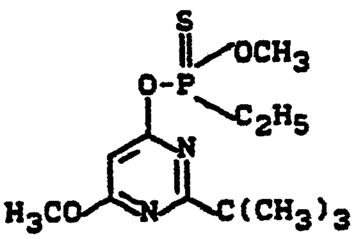

4. Composé de formule

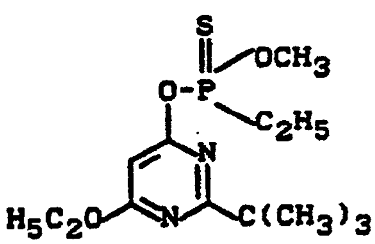

5. Procédé de production des diesters de O-(6-alkoxy-2-terio-butyl-pyrimidine-4-yle) et de O-méthyle d'acide thionoéthanephosphonique de formule générale (I)

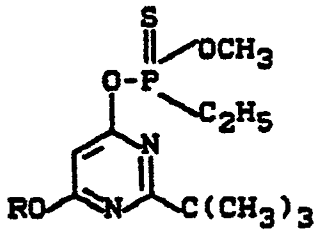

(I)

dans laquelle R est un groupe alkyle de 1 à 4 atomes de carbone ou un groupe cycloalkyle de 3 ou 4 atomes de carbone, caractérisé en ce que
(a) on fait réagir des 6-alkoxy-2-tertio-butyl-4-hydroxy-pyrimidines de formule générale (II)

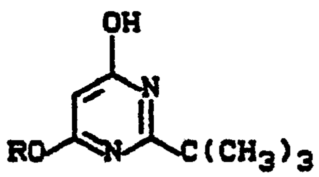

(II)

dans laquelle R a la définition indiquée ci-dessus, avec l'ester de méthyle du chlorure d'acide thionoéthane-phosphonique de formule (III)

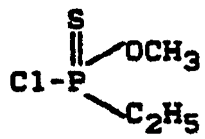

(III)

éventuellement en présence d'un accepteur d'acide et le cas échéant en présence d'un diluant, ou bien
(b) on fait réagir le diester de O-(6-hydroxy-2-tertio-butyl-pyrimidine-4-yle) et de O-méthyle de l'acide thionoéthanephosphonique de formule (IV)

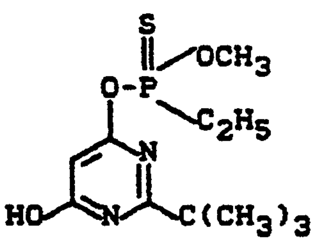

(IV)

avec des agents alkylants de formule générale (V)
R–X (V)
dans laquelle R a la définition indiquée ci-dessus et X est un groupe partant nucléofuge, le cas échéant en présence d'un accepteur d'acide et en la présence éventuelle d'un diluant.

6. Composition pesticide, caractérisée par une teneur en au moins un composé suivant les revendications 1 à 4 ou de formule (I) suivant la revendication 5.

7. Utilisation de composés suivant les revendications 1 à 4 ou de formule (I) suivant la revendication 5 pour combattre des parasites, notamment des insectes.

8. Procédé pour combattre des parasits, caractérisé en ce qu'on fait agir des composés suivant les revendications 1 à 4 ou de formule (I) suivant la revendication 5 sur les parasites, de préférence des insectes, ou sur leur milieu.

9. Procédé de préparation de compositions pesticides, caractérisé en ce qu'on mélange des composés suivant les revendications 1 à 4 ou de formule (I) suivant la revendication 5 avec des diluants et/ou des agents tensio-actifs.

10. Composé de formule